# EUROPEAN PATENT APPLICATION

(11) **EP 1 122 572 A1**
(43) Date of publication of application: **08.08.2001**
(21) Application number: 99940511.1
(22) Date of filing: 26.08.1999
(51) Int. Cl.: G02B 6/44

(54) **DEVICE AND METHOD FOR PRODUCING OPTICAL CABLE SLOT ROD**

(30) Priority: 21.10.1998 JP 29961998
(71) Applicant: Sumitomo Electric Industries, Ltd., Osaka-shi, Osaka 541-0041 (JP)
(72) Inventor: ITO, Hiroyuki Yokohama W. Sumitomo El. Ind., Ltd., Yokohama-shi, Kanagawa 244-8588 (JP); OKADA, Takehiko Yokohama W Sumitomo El. Ind., Ltd., Yokohama-shi, Kanagawa 244-8588 (JP); YASUI, Shigeki Yokohama W. Sumitomo El. Ind., Ltd., Yokohama-shi, Kanagawa 244-8588 (JP); ARAKI, Teruo Yokohama W. Sumitomo Elec. Ind., Ltd., Yokohama-shi, Kanagawa 244-8588 (JP)
(74) Representative: HOFFMANN - EITLE
(86) International application number: JP9904625
(87) International publication number: WO0023839

(57) **Abstract**

An apparatus and method is provided for producing a slotted rod having an SZ-slot, in which the position of an inverting portion is prevented from being displaced. The peak values of a speed command voltage on the forward rotation side and on the reverse rotation side to be applied to a variable-speed motor for a rotary die in an apparatus for producing a slot rod are separately set, and the time integral values of the speed command voltage on the forward rotation side and on the reverse rotation side are set to be equal to each other, thereby canceling the influence of an offset voltage of the speed command voltage.

## Description

### Technical Field

The present invention relates to an apparatus and method for producing a slotted rod having an SZ-slot for an optical fiber cable.

### Background Art

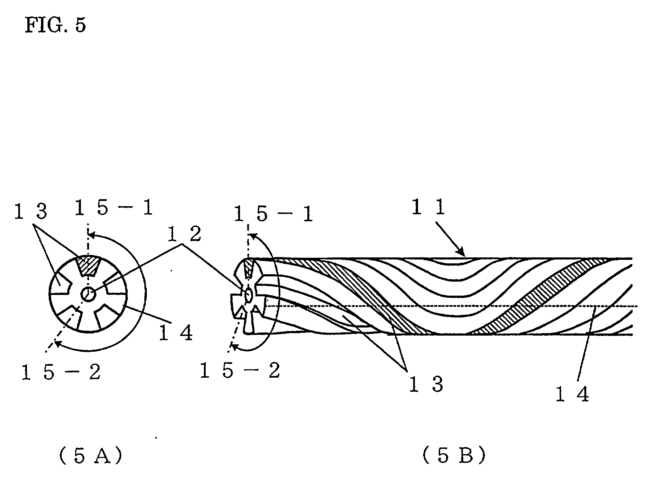

As a slot shape of a slotted rod for accommodating an optical fiber, a socalled "SZ-slot" is known, in which the direction of a spiral slot alternates in the S-twist direction and the Z-twist direction. Figures 5A and 5B are a sectional view and a perspective view, respectively, of an example of a slotted rod having such SZ-slots.

In figures 5A and 5B, reference numerals 11, 12, 13, and 14 respectively denote a slotted rod, a tension member, slots, and the center line of inversion.

The center line of inversion is a virtual axis linking the points in each slot between a point where the slot is inverted (inverting portion) and the adjacent inverting portion, and exists for each slot. In figures 5A and 5B, inverting portions of a diagonally shaded slot are denoted by reference numerals 15-1 and 15-2, and the center line of inversion is denoted by reference numeral 14. The slotted rod 11 is made of thermoplastic resin by extrusion molding so as to have the tension member 12 placed at the center thereof. One or more slots 13 are formed on the peripheral surface of the slotted rod 11.

When inserting optical fibers into a slotted rod having SZ-slots, while the slotted rod is pulled straight out, each of the slots forms a trail such that it turns at a predetermined angle with respect to the center line of inversion to the forward side and the reverse side and then returns. In the case of a slot rod having an S-slot or a Z-slot that forms a trail such that it turns in one direction on the surface of the slotted rod, it is necessary to rotate an optical fiber feed-in device or a slotted rod feed-in device as well as a take-up device, and this requires large and complicated equipment.

In contrast, when a slotted rod having an SZ-slot is used, the slotted rod need only be turned so that the position where the optical fiber is inserted is periodically inverted, and it does not require the use of a mechanism for rotating such large devices. This makes it possible to simplify the production equipment substantially, reduce costs, and improve safety.

In a known method for molding a slotted rod having an SZ-slot, molten thermoplastic resin is extruded with a die having a pit or a projection corresponding to the sectional shape of the slot on several points on the inner peripheral surface, while the die is rotated in alternate direction.

The die is driven by a combination of a variable-speed motor, which can rotate forward and in reverse, and a gear. A typical method for controlling the motor is a speed control method for controlling the rotation speed of the die, in which a speed command voltage is basically a voltage having a sinusoidal waveform. The cycle of inversion of the SZ-slot is the same as the period of the speed command signal. Since the inversion angle is proportional to the time integral value of the speed command voltage, it is determined by the amplitude of the sinusoidal voltage waveform. Therefore, the period or amplitude of the speed command signal having a sinusoidal voltage waveform is changed in order to change the cycle or inversion angle of the SZ-slot.

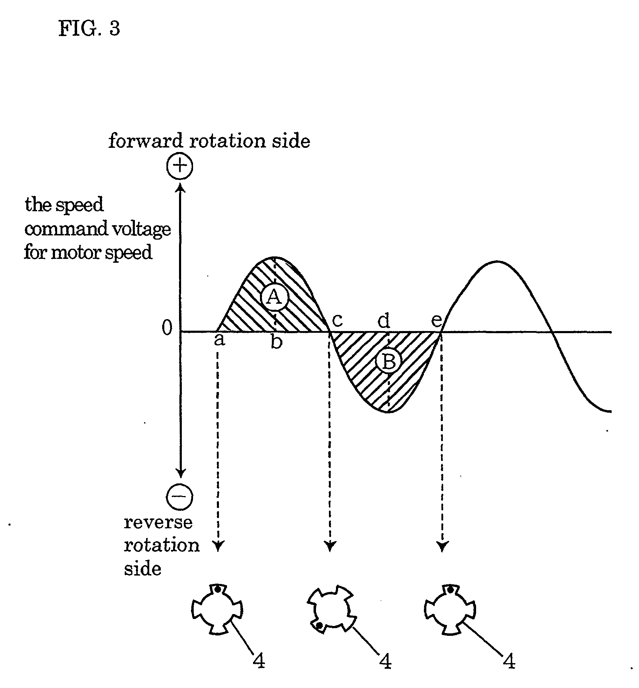

Figure 3 shows an ideal time-varying voltage waveform of speed command voltage and the rotational position of the die. In order to easily understand the rotational position of the die, a point is shown at one position thereof. Regarding the speed command voltage for the motor with respect to time in a conventional method, a normal sinusoidal waveform is ideal, in which the periods on the forward rotation side and the reverse rotation side are the same, and positive and negative absolute values of amplitudes are equal to each other, as shown in Fig. 3. That is, the speed command voltage is 0 V at a starting position "a" and increases with time toward a point b, and the speed of the motor also increases. The time integral value of this voltage, that is, the area of the voltage waveform, is proportional to the rotation angle of the die. The speed of the motor decreases beyond a point "b", and falls to 0 at a point "c". Subsequently, a speed command voltage in a negative direction is applied, and the motor begins to rotate in reverse. At a point "d", the speed of the motor reaches the maximum speed in the reverse direction. After that, the speed gradually decreases and falls to 0 at a point "e". In this case, when the area A on the forward side and the area B on the reverse side in Fig. 3 are equal to each other, the forward rotation angle and the reverse rotation angle of the die are also equal to each other, so that the rotary die returns to the starting position, and the center line of inversion of the SZ-slot invariably lies at a constant angular position on the rim of the cross section of the slotted rod which is stretched straight.

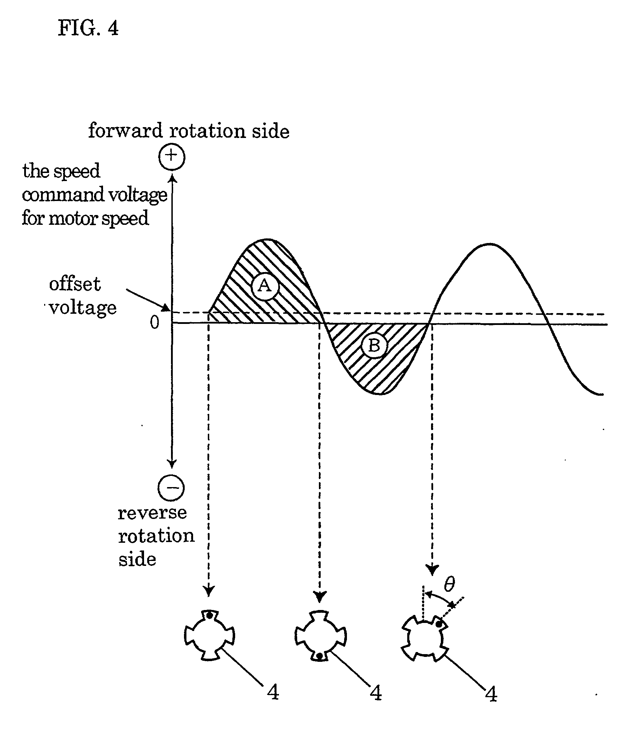

The speed command voltage for the motor in the conventional method has, as a design value, a sinusoidal voltage waveform in which a speed command voltage on the forward rotation side and a speed command voltage on the reverse rotation side are the same in period and peak value. In an actual speed command voltage, however, the sinusoidal wave drawn by the voltage is displaced from the origin upward or downward due to the characteristics of an electrical device for generating the speed command voltage, and an offset voltage always exists corresponding to the displacement. For this reason, as shown in Fig. 4, the speed command voltage does not have a perfectly sinusoidal waveform centered on 0 V, but has waveform displaced to the positive side or the negative side. The offset voltage sometimes reaches 2% to 3% of the peak value of the speed command voltage. This causes a difference between the rotation angle of the die on the forward rotation side and that on the reverse rotation side. When alternate forward and reverse driving is repeated in this state, since the rotation angle on one side is always larger than that on the other side, a shift by an angle θ is produced in one cycle, as shown in Fig. 4, causing a gradual displacement of the position of the inverting portion of the SZ-slot. Simultaneously, the center line of inversion forms a trail that spirally turns on the outer periphery of the slotted rod. Since there is a correlation between the position of the inverting portion of the SZ-slot and light transmission loss of the optical fiber, such a change in position of the inverting portion increases light transmission loss of the optical fiber.

As described above, when the motor for driving the rotary die is successively and alternately rotated forward and in reverse in order to form an SZ-slot by the equipment for producing a slotted rod for an optical fiber cable, the position of the center line of inversion of the die gradually becomes displaced. Accordingly, the position of the inverting portion is not fixed in the longitudinal direction of the slot, which causes an increase in light transmission loss.

Since the center line of inversion turns in one direction, it is necessary to turn the optical fiber feed-in position relative to the center axis of the slotted rod, and this diminishes the advantages provided by using the slotted rod having an SZ-slot; that is, this makes it difficult to simplify the production equipment and to reduce costs.

An object of the present invention is to provide an apparatus and method for producing a slotted rod for an optical cable in which the position of an inverting portion is prevented from being displaced.

### Disclosure of Invention

The present invention provides an optical cable slotted rod production apparatus for producing a slotted rod having an SZ-slot for an optical cable by cyclically reversing the rotating direction of a rotary-die-driving variable-speed motor for driving a rotary die alternately in the forward direction and the reverse direction, wherein the peak values of a speed command voltage for the rotary-die-driving variable-speed motor on the forward rotation side and on the reverse rotation side are separately set. The speed command voltage may have a periodic waveform, such as a sinusoidal waveform or a trapezoidal waveform.

The above optical cable slotted rod production apparatus includes a control means, having a starting position detection sensor for detecting the starting position of the rotary die, so as to change the speed command voltage compulsorily to a predetermined value according to the output from the starting position detection sensor.

The detection timing of the starting position detection sensor in the above invention is limited to a predetermined phase range of the voltage waveform in which the speed command voltage is periodically inverted.

There is provided an optical cable slotted rod production method using the production apparatus of the above invention, wherein the voltage values on the forward rotation side and on the reverse rotation side are set such that the integral values of the speed command voltage on the forward rotation side and on the reverse rotation side are substantially equal to each other.

There is provided an optical cable slotted rod production method wherein the peak value on one of the forward rotation side and the reverse rotation side is higher than that on the other side, and the effect of the offset is cancelled by inverting the speed command voltage compulsorily to the side where the peak value is higher, according to the output from the starting position detection sensor.

### Brief Description of the Drawings

Figure 1 is a general structural view showing the principal parts of an apparatus for producing a slotted rod for an optical cable according to the present invention.

Figure 2 is an explanatory view showing the voltage waveform of a speed command voltage and the rotational position of a die according to an embodiment of the present invention.

Figure 3 is an explanatory view showing the ideal voltage waveform of the speed command voltage and the rotational position of the die.

Figure 4 is an explanatory view showing the voltage waveform of a speed command voltage including an offset voltage and the rotational position of the die.

Figure 5 is a perspective view of an example of a slotted rod having SZ-slots.

### Best Mode for Carrying Out the Invention

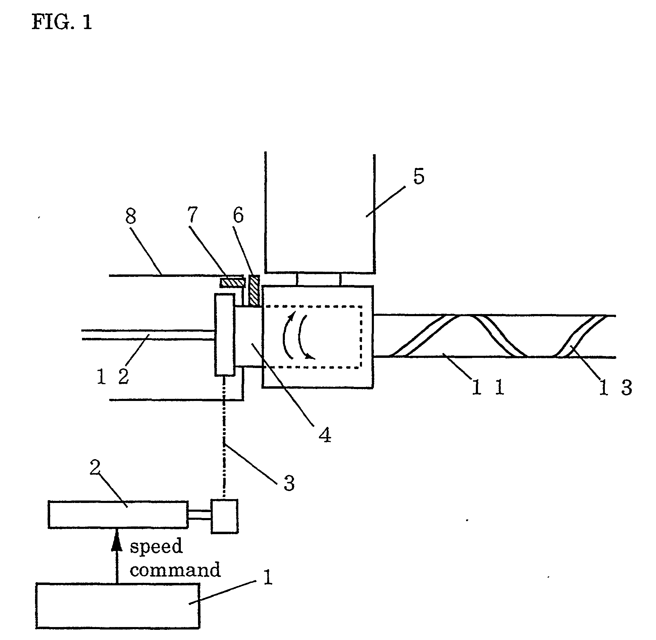

Figure 1 is a general structural view showing the principal part of an apparatus for producing a slotted rod for an optical cable according to the present invention. In the figure, reference numerals 1, 2, 3, 4, 5, 6, 7, 8, 11, 12, and 13 respectively denote a line control device, a variable-speed motor, a transmission mechanism, a rotary die, an extruder, a steel plate for the proximity sensor, a proximity sensor, a pedestal, a slotted rod, a tension member, and a slot.

The line control device 1 is a control section for programming driving conditions for the variable-speed motor 2. A predetermined speed command signal, that is, a speed command voltage, is generated therefrom, and the variable-speed motor 2 is rotated at a speed corresponding to the value of the speed command signal. The line control device 1 is a microcomputer to be operated based on programming, and is capable of high-speed digital processing. The variable-speed motor 2 is a reversible motor which can change the direction of rotation in accordance with the polarity of the speed command signal and which rotates forward and in reverse. The rotation of the variable-speed motor 2 is transmitted to the rotary die 4 via the transmission mechanism 3 so as to drive the rotary die 4. The tension member 12 is inserted into the center of the rotary die 4, and molten thermoplastic resin is supplied and extruded from the extruder 5 to the periphery of the tension member 12, thereby producing a slotted rod 11 with a slot 13 whose direction of twist changes longitudinally in response to the rotation of the rotary die 4 in the direction of cyclical variation.

In this embodiment, the steel plate for the proximity sensor 6 rotating together with the rotary die 4 is provided to detect the angular position of the rotary die 4, and it is detected that the steel plate for the proximity sensor 6 comes close to the position of the proximity sensor 7 fixed to the pedestal 8. The steel plate for the proximity sensor 6 is characterized in being selected by the detecting means of the proximity sensor 7 and in being detected by the proximity sensor 7. Therefore, when a microswitch is used as the proximity sensor 7, the steel plate for the proximity sensor 6 is formed as a projection or the like to abut against the microswitch. When an electromagnetic proximity switch is used as the proximity sensor 7, the steel plate for the proximity sensor 6 is formed of a magnetic material. Other appropriate sensors, such as a photoelectric sensor or a capacitance sensor, may be used as the proximity sensor 7, and the steel plate for the proximity sensor 6 may be selected corresponding thereto.

In the specific example shown in Fig. 1, an AC servomotor (capacity: 37 kW, rated number of revolutions: 1500 rpm) was used as the variable-speed reversible motor for driving the rotary die, and a proximity switch was used as a starting position detection sensor.

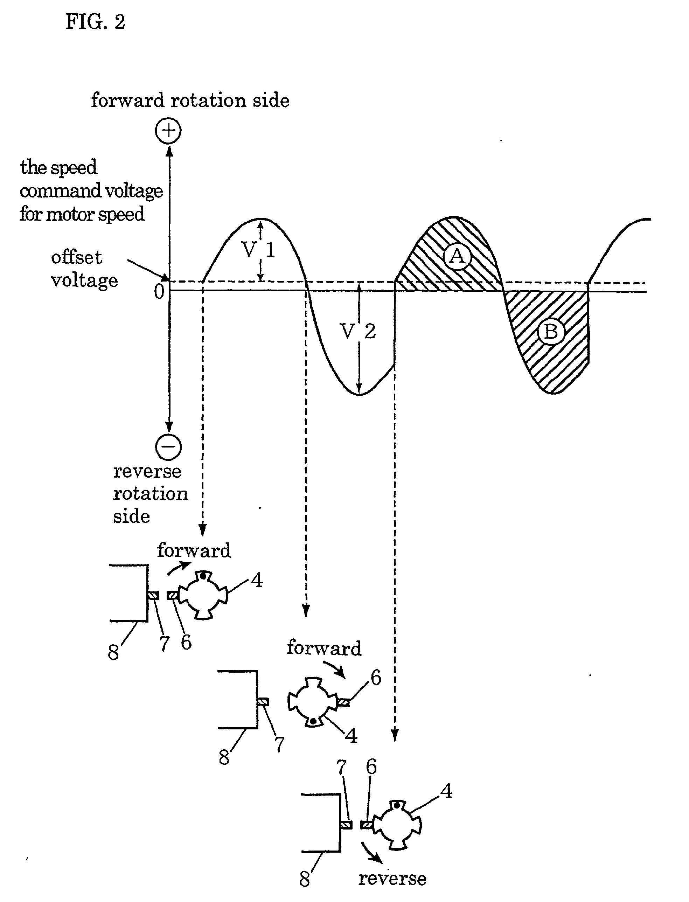

A method for driving the rotary die will be described with reference to Fig. 2. Figure 2 shows a speed command voltage and the rotational position of the rotary die, in a manner similar to that in Figs. 3 and 4. The rotation angle at which the steel plate for the proximity sensor 6 rotating with the rotary die 4 is placed at the proximity sensor 7 for detecting the starting position is designated as the starting position of the rotary die 4. When a slotted rod is to be molded, driving of the variable-speed motor is started so that the direction of rotation of the variable-speed motor is cyclically altered at the starting position to the forward direction and to the reverse direction from the starting position. If the rotary die 4 is not at the starting position when a slotted rod is to be molded, it is first rotated to the starting position and then molding is started.

The voltage waveform of the speed command voltage for the variable-speed motor 2, which alternately rotates the rotary die 4 forward and in reverse so as to form an SZ-slot, is not a simple sinusoidal waveform, but is basically a waveform such that an amplitude V2 of a driving voltage on the reverse rotation side is several percent (+α%) greater than an amplitude V1 of a driving voltage on the forward rotation side, relative to an offset voltage as shown in Fig. 2.

The period does not vary on the forward rotation side and on the reverse rotation side. This allows the die to be reliably returned to the starting position even when the die has been rotated substantially more on the forward rotation side by the offset voltage.

By thus setting the peak value on one side to be higher than on the other side, it is possible to make corrections not only when the time integral area of the waveform of the speed command signal on the forward rotation side due to the influence of the offset voltage is smaller than the time integral area of the waveform of the speed command signal on the reverse rotation side, but also when the time integral area of the waveform of the speed command signal on the forward rotation side is greater than the time integral area of the waveform of the speed command signal on the reverse rotation side. The value α may be arbitrarily selected. While the speed command signal on the forward rotation side has a positive offset voltage in the above description, correction is, of course, also easily made in a case in which the speed command voltage on the reverse rotation side has an offset voltage.

When the proximity sensor 7 detects the timing at which the rotary die 4 has reached the starting position, the speed command voltage on the reverse rotation side is reset and is simultaneously switched to a speed command voltage on the forward rotation side. This is shown in Fig. 2 in which the sinusoidal wave is reset to 0 V slightly before 360°. Accordingly, the areas A and B are equal to each other. As a result, the forward rotation angle and the reverse rotation angle of the motor are equal to each other, and the rotary die is reversed at nearly the same position each time on the forward rotation side and the reverse rotation side, which can avoid the displacement of the center line of inversion of the SZ-slot.

There is a slotted rod in which the angle, at which a slot turns on the peripheral surface of the slotted rod between adjoining inverting positions, is set at 360° or more. In order to produce such a slotted rod, a starting position signal is detected twice or more during rotation in either the forward or reverse directions because the forward and reverse rotation angle of the rotary die 4 is 360° or more. Therefore, it is preferable that the timing of resetting the speed command voltage on the reverse rotation side to 0 V is limited so that the starting position signal is detected only when the phase of the sinusoidal waveform is within a limited phase range of, for example, 1.5 π (270°) to 2 π (360°). Preferably, the phase range is arbitrarily limited by programming.

The speed command voltage may be arbitrarily set to have a waveform other than the sinusoidal waveform. In this embodiment, a desired waveform can be produced by programming in the line control device 1. While a single position detection sensor has been illustrated above, a plurality of position detection sensors may be provided.

As is clear from the above description, according to the present invention, since the peak values of the speed command voltage on the forward rotation side and on the reverse rotation side for the variable-speed motor for driving the rotary die can be separately set, it is possible to cancel the offset voltage in accordance with the polarity thereof, and to correct cumulative displacement of the reverse angular position due to the offset voltage of the device for driving the rotary die.

Furthermore, since the starting position detection sensor is provided to detect the starting position of the rotary die and the speed command voltage is compulsorily changed to a predetermined value according to the output from the starting position detection sensor, it is possible to reliably return the rotary die even though the rotary die is to be repeatedly reversed. Since the starting position does not vary, the reverse angular position is stabilized, and a phenomenon, in which the position of the inverting portion gradually changes, is avoided. This makes it possible to reduce optical transmission loss due to changes in the position of the inverting portion of the SZ-slot, and thereby to improve the performance of the optical cable.

Since the detection timing of the starting position detection sensor is limited in the phase range of the speed command voltage, the rotation angle of the rotary die can be set to be 360° or more, and it is possible to produce a slotted rod with an SZ-slot in which the turning angle of the die from an inverting portion to the adjacent inverting portion is 360° or more.

Since the voltages on the forward rotation side and on the reverse rotation side are set so that the time integral values of the speed command voltage on the forward rotation side and on the reverse rotation side are substantially equal to each other, the position of the inverting portion is stabilized, and a phenomenon, in which the position of the inverting portion gradually changes, is avoided. This makes it possible to reduce optical transmission loss due to changes in the position of the inverting portion of the SZ-slot, and thereby to improve the performance of the optical cable.

Since the offset value is canceled with reference to one of the forward and reverse rotation sides where the peak value is lower, the speed command voltage is inverted compulsorily based on the output from the starting position detection sensor when the die is rotated to the side where the peak value is higher, thereby canceling the influence of the offset voltage. This makes it possible to correct cumulative displacement of the reverse angular position due to the offset voltage of the device for driving the rotary die.

### Industrial Applicability

As described above, by using the optical cable slotted rod production apparatus and method of the present invention, even when an offset voltage exists in the variable-speed motor, it is possible to form slots of the same periodicity and of the same size on the forward rotation side and on the reverse rotation side in a slotted rod having an SZ-slot. Since the position of the inverting portion does not become displaced from the designed position, it is possible to obtain an optical cable having superior transmission characteristics.

## Claims

1. An optical cable slotted rod production apparatus comprising a rotary die and a variable-speed motor for driving said rotary die, said slotted rod having one or more SZ-slots that is molded by cyclically reversing the rotating direction of said variable-speed motor in the forward direction and the reverse direction, wherein the peak values of a speed command voltage for said variable-speed motor can separately be set on the forward rotation side and on the reverse rotation side.

2. An optical cable slotted rod production apparatus according to Claim 1, further comprising a control means having a starting position detection sensor for detecting the starting position of said rotary die, said control means changing the speed command voltage to a predetermined value compulsorily according to the output from said starting position detection sensor.

3. An optical cable slotted rod production apparatus according to Claim 2, wherein the timing detected by said starting position detection sensor is limited in a predetermined phase range of the voltage waveform in which the speed command voltage is periodically inverted.

4. An optical cable slotted rod production method using an optical cable slotted rod production apparatus as claimed in Claim 1, wherein the voltage values on the forward rotation side and on the reverse rotation side are set so that the integral values of the speed command voltage on the forward rotation side and on the reverse rotation side are substantially equal to each other.

5. An optical cable slotted rod production method using an optical cable slotted rod production apparatus as claimed in Claim 2 or 3, wherein in order to cancel an offset voltage of a device for generating the speed command voltage, according to the peak value of either the forward rotation side or the reverse rotation side, whichever is lower than that of the other side, the influence of the offset voltage is cancelled by inverting the speed command voltage compulsorily according to the output from said starting position detection sensor when said die is rotated to the side where the peak value is higher.
